# EUROPÄISCHE PATENTSCHRIFT

(11) **EP 0 690 829 B1**
(45) Veröffentlichungstag und Bekanntmachung des Hinweises auf die Patenterteilung: **16.10.1996**
(21) Anmeldenummer: 94911939.0
(22) Anmeldetag: 22.03.1994
(51) Int. Cl.: C04B 18/16, C04B 28/00

(54) **VERFORMBARE DEPONIEMASSE**
WASTE DISPOSAL DEFORMABLE COMPOUND
MATERIAU DEFORMABLE POUR L'ELIMINATION DE DECHETS

(30) Priorität: 26.03.1993 AT 613/93
(43) Veröffentlichungstag der Anmeldung: 10.01.1996
(73) Patentinhaber: Lukas, Walter, Prof. Dr., A-6080 Igls (AT)
(72) Erfinder: Lukas, Walter, Prof. Dr., A-6080 Igls (AT)
(74) Vertreter: Becker, Thomas, Dr., Dipl.-Ing.
(86) Internationale Anmeldenummer: EP9400882
(87) Internationale Veröffentlichungsnummer: WO9422783

(56) Entgegenhaltungen:
- EP-A- 0 239 740
- EP-A- 0 483 884
- AT-A- 393 381
- DE-A- 3 800 776

## Beschreibung

Die Erfindung betrifft die Verwendung einer nach Wasserzugabe dauerhaft verformbaren Masse zur Umhüllung beziehungsweise Einkapselung und damit Immobilisierung von schadstoffhaltigen Produkten beziehungsweise zur Herstellung von Schlitzwänden.

Der Begriff "dauerhaft verformbare Masse" bedeutet, daß die Masse auch nach Tagen, Wochen oder Monaten verformbar bleibt und - zum Beispiel nach Einfüllen in eine Schalung oder ein Erdloch-mechanische Verformungen von Basis- und Seitenflächen aufnehmen kann.

Der Begriff "Umhüllung beziehungsweise Einkapselung" bedeutet, daß die Masse sowohl den einzelnen, schadstoffhaltigen Körper umhüllen oder einkapseln als auch nach Art einer Dichtwandmasse oder Dichtungsschicht zum Beispiel zur Auskleidung beziehungsweise Abdeckung eines größeren Erdlochs, wie einer Deponiegrube oder Hochdeponie, eingesetzt werden kann. In beiden Fällen geht es darum, kontaminierte Materialien sicher und zuverlässig "einzuschließen", also ein Eindringen der Schadstoffe in das Erdreich oder Grundwasser soweit wie möglich zu verhindern, weshalb der Begriff "Umhüllung oder Einkapselung" gleichzeitig auch inkludiert, daß es sich dabei um eine möglichst dichte Umhüllung mit kleinstmöglichem k-Wert und geringer Auslaugbarkeit handeln soll.

Zum Beispiel zur Abdichtung einer Deponie sind zahlreiche Vorschläge gemacht worden, die unter anderem wie folgt charakterisiert werden können:
- Reine Tonabdichtungen. Der Nachteil ist, daß nur spezielle und teure Tone verwendbar und nicht überall vorhanden sind. Der k-Wert schwankt je nach Rohstoffbasis.
- Folienabdichtungen. Diese Art der Dichtung ist vor allem bei größeren Projekten kompliziert und teuer. Risse durch Frost-/Tauwechsel und eine dadurch bedingte Versprödung der Folie sind nicht auszuschließen.
- Ton-/Bindemittel-Gemische. Diese finden vor allem als sogenannten Ein- und Zweiphasen-Dichtwandmassen Anwendung. Nähere Einzelheiten ergeben sich aus der folgenden Literatur: EP 0 262 302 B2, EP 0 522 347 A2, DE 36 33 736 C2, AT 393 381 B, EP 0 239 740 A3 und DE 38 00 776 Al.
In jedem Fall bindet das Gemisch früher oder später aufgrund der (latent)hydraulischen Mischungsanteile ab. Es kann danac keine äußeren Verformungen mehr aufnehmen.

In allen Fällen werden Primärstoffe als Dichtungsmaterialien eingesetzt.

Die Art der zu umhüllenden Materialien kann sehr unterschiedlich sein. Hierzu gehören beispielsweise: Bauschutt, REA-Gips (Calciumsulfatprodukte aus der Rauchgasentschwefelung), Schlacken und Aschen aus Verbrennungsanlagen, Absetzschlämme aus der Kieswäsche, stabilisierte Salze, Klärschlämme etc. Die meisten dieser zum Teil kontaminierten Stoffe werden auf Sondermülldeponien entsorgt und zwar zum Beispiel in einer Deponie, die mit einer wannenähnlichen Tondichtung ausgebildet ist.

Eine Verwertungsmöglichkeit (ein Recycling) ist bisher nur bedingt bekannt und möglich.

So werden (geringe) Anteile von aufbereitetem Bauschutt (nach Kornfraktionen klassiert) als Zuschlag bei der Betonherstellung eingesetzt.

Aus "Baustoff-Recycling & Deponietechnik" Nr. 1, 1991, 13 ist die Verwendung von Recyclingskies als Schüttgut zur Herstellung von Fahrstraßen bekannt.

In der EP 0 148 430 A1 werden hydraulische Aschen zur Herstellung von Dichtungsmassen beschrieben, die nach dem Abbinden starr sind.

In der EP 0 483 884 A2 wird eine Dichtmasse aus etwa 15 Gew.-% Tonmehl und etwa 85 Gew.-% nicht karbonatischem Ergußgestein der Kornfraktion bis 63 mm sowie einem porendichtenden Hydrogel beschrieben.

Aus der AT 393 381 B ist ein Bindemittelgemisch für Dichtwände aus Tonmineralen, Portlandzementklinker oder Zement bekannt, das zusätzlich Hochofenschlacke, Flugasche oder Traß aufweisen kann, die mit dem Klinker oder Zement hydraulisch reagieren und das Bindemittelgemisch aushärten.

Ausgehend von diesem Stand der Technik besteht das Problem, eine auch über längere Zeit verformbare Dichtungsmasse zur Verfügung zu haben, die aus preiswerten und überall verfügbaren Ausgangsstoffen zusammengesetzt ist. Die Masse soll eine möglichst gute Dichtigkeit aufweisen und möglichst universell einsetzbar sein. Dies gilt insbesondere in Hinblick auf ein vielfach gefordertes Multibarrierensystem. Dabei wird das schadstoffhaltige Deponiegut über verschiedene Dichtungsysteme gegenüber der Umgebung (insbesondere dem Boden) geschützt.

Die Erfindung schlägt dazu die Verwendung einer nach Wasserzugabe dauerhaft verformbaren, also nicht aushärtenden Masse mit den Merkmalen des Hauptanspruchs vor.

Danach zeichnet sich die Masse durch insgesamt 3 Komponenten aus, nämlich:
- 1 bis 90 Gew.-% einer Komponente A, die aus Bau-Reststoffen, nicht reaktiven Schlacken, abgebundenen anorganischen Bindemitteln, hydraulisch nicht reaktiven Bindemitteln, nicht reaktiven Bindemittelbestandteilen oder einer Mischung daraus in einer Kornfraktion <32 mm besteht,
- 2 bis 15 Gew.-% eines quellfähigen Tonminerals (Komponente B),
- 1 bis 90 Gew-% einer Komponente C, die aus Bau-Reststoffen, nicht reaktiven Schlacken, abgebundenen anorganischen Bindemitteln, hydraulisch nicht reaktiven Bindemitteln und hydraulisch nicht reaktiven Bindemittelbestandteilen einschließlich Aschen, Steinmehl oder einer Mischung daraus in einer Kornfraktion 1mm besteht,
wobei die Summe der Komponenten B und C mindestens 10 Gew.-% beträgt.

Im einzelnen ist dabei folgendes von Bedeutung:

Keine der 3 Zwangskomponenten enthält erhärtende (hydraulisch abbindende) Stoffe. Dies schließt, wie nachstehend noch erläutert wird, die Verwendung von Produkten nicht aus, die grundsätzlich (von Hause aus) zumindest latenthydraulische Eigenschaften besitzen, die jedoch nur unter bestimmten, erfindungsgemäß nicht gegebenen Voraussetzung zur Wirkung kommen (zum Beispiel feinteilige Aufbereitung, alkalische Anreger).

Die Komponenten A und C bestehen zumindest teilweise aus Produkten, die selbst als Reststoffe (Recyclingstoffe) bezeichnet werden können. Dazu gehören auch Aschen, insbesondere Braunkohlenaschen und Schlacken, die jedoch in einer solchen Kornfraktion (Komponente A) eingesetzt werden, bei der sie nicht hydraulisch sind beziehungsweise auch in feinteiliger Form sich weitestgehend inert gegenüber Wasser verhalten.

Auf diese Weise können Stoffe, die normalerweise selbst zu deponieren wären, als Komponente zur Herstellung eines Dichtungsteppichs für Deponien oder dergleichen verwendet werden.

Ein wesentliches Merkmal der Masse ist auch der gegenüber reinen Tondichtungen oder Schlitzwandmassen charakteristisch geringe Ton(mineral)anteil.

Dessen Einfluß auf die physikalischen Eingenschaften der Masse (Dichtigkeit, also k-Wert, Festigkeitswerte etc.) ist - wie durch Versuche bestätigt werden konnte - auf die Kombination mit der feinteiligen Komponente C zurückzuführen, die zwar nicht oder zumindest nicht in nennenswertem Umfang wasseraufnehmende Stoffe umfaßt, jedoch in der Gesamtmasse Zwickel und Brücken zwischen der groben Komponente A und der nach Wasserzugabe stark quellenden Komponente B ausfüllt.

Aus diesem Grund sollen die Komponenten B und C stets mindestens 10 Gew.-% der Gesamtmasse ausmachen. Auch dieser Wert liegt deutlich unter dem Wert der Gesamt-Feinanteile bekannter Dichtungsmassen.

Weitere Merkmale der verwendeten Masse sind nach verschiedenen, in den Unteransprüchen formulierten Alternativen:
- die Komponente A liegt in einer maximalen Korngröße von 16mm vor.
- der Anteil der Komponente A innerhalb der Gesamtmasse (trocken) beträgt 70 bis 85 Gew.-%.
- die Komponente C liegt in einer Kornfraktion <100ym vor.
- die Komponente A, die Komponente C oder beide bestehen aus klassierten Bau-Abbruchmaterialien, Müllverbrennungsschlacken, Hochofenschlacken, Gips, Gipsknorpeln, nichtreaktiven granulierten oder kompaktierten Aschen, insbesondere aus kalorischen Kraftwerken, Wirbelschichtaschen sowie SAV- und TAV-Produkten einzeln oder in Kombination.
- die Komponente B besteht aus speziell aufbereiteten Tonmineralien wie Bentonit, vorzugsweise Na-Bentonit, der ein besonders ausgeprägtes Quellvermögen zeigt.

Die Masse kann je nach Art der Zusammensetzung und Aufbereitung zum Beispiel wie folgt eingesetzt werden:
- zur Umhüllung einzelner kontaminierter Teilchen oder Teilchen-agglomerate, wie dies in der beiliegenden Schemazeichnung mit "1" gekennzeichnet ist. Man könnte diese Art der Verwendung auch "Panierung" oder "Kapselung" von Schadstoffen oder kontaminiertem Gut nennen.
- zur Herstellung von Dichtungsschichten. In der Schemazeichnung ist dieser Fall an Hand einer Dichtungsschicht in einer Deponie mit "2" dargestellt.
- zur Herstellung einer "Deponiewanne", die wiederum der Aufnahme von Deponiegut dient (Fall "3").

Daraus folgt gleichzeitig die Ausbildung eines Multibarrierensystems mit Hilfe der beschriebenen Masse. Die Schadstoffe können mehrfach gesichert werden, erstens durch unmittelbare "Panierung/Kapselung", zweitens auf oder zwischen horizontal angeordneten Schichten und drittens innerhalb einer durch die beschriebene Masse nach außen abgedichteten Wanne.

Soweit dies gewünscht wird oder nicht störend ist kann die Masse auch durch einen Anteil eines zumindest latent hydraulischen Bindemittels ergänzt werden, so daß sie anschließend abbindet und starr (fest) wird. Zu diesem Zweck werden entweder die oben beschriebenen Anteile der Komponenten A,C in einer solchen Form (Feinteiligkeit) oder mit solchen Zusätzen (Anregern) verwendet, daß das Bindemittel quasi in-situ ausgebildet wird. Ebenso kann es natürlich auch zugegeben werden. Geeignete, zumindest latent hydraulische Bindemittel in diesem Sinne sind: Flugaschen aus kalorischen Kraftwerken, TAV-Aschen (Aschen, die in Verbrennungsanlagen durch Zugabe von CaO, Ca(OH)₂ oder CaCO₃ zur SO₂-Bindung entstehen), die erdalkalisch angeregt werden, SAV-Produkte (Sprühabsorptionsprodukte, Gemisch aus Ca-Sulfit und CaSO₄), natürliche oder synthetische Si-Pulver oder vulkanische Aschen und Puzzolane.

Je nach den gewünschten Eigenschaften des Endprodukts werden die Mengenteile der Komponten A und C innerhalb der genannten Grenzen ausgewählt.

Weitere Merkmale der Erfindung ergeben sich aus den nachfolgenden Beispielen. Dabei sind verschiedene Massen näher dargestellt:

| Masse 1: | Gew.-% |
|---|---|
| A: Bauschutt, Korngröße <22mm, Standard-Sieblinie B | 82,0 |
| B: Natrium-Bentonit (Qualitätsbezeichnung: B4) | 3,0 |
| C: Gesteinsmehl, Korngröße <100ym | 15,0 |

Die Masse wird mit 9,0 Gew.-% Wasser (bezogen auf die Gesamtmischung) versetzt , in einem Zwangsmischer gemischt und mittels einer Fördereinrichtung zu einer Einbaustelle gebracht und verfüllt. Folgende physikalische Kenndaten wurden nach 28 Tagen bestimmt:
- Druckfestigkeit (N/mm²) :: 0,28
- k-Wert (m/s) :: 4 x 10⁻¹¹

| Masse 2: | Gew.-% |
|---|---|
| A1: Bauschutt, Korngröße <32 mm | 42,0 |
| A2: Schlacke einer Müllverbrennungsanlage (<22mm) | 42,0 |
| B: Natrium-Bentonit (B4) | 3,0 |
| C: nicht reaktive Flugasche (<100ym) | 13,0 |

Die Aufbereitung erfolgt analog der Masse 1, jedoch mit 6,0 Gew.-% Wasser. Nach 28 Tagen wurden folgende Werte gemessen:
- Druckfestigkeit (N/mm²) :: 0,34
- k-Wert (m/s) :: 1,1 x 10⁻¹²

| Masse 3: | |
|---|---|
| A1: Bauschutt, Korngröße <2mm | 35,0 |
| A2: inerte Asche (aus einem kalorischen Kraftwerk) | 12,0 |
| B: Bentonit | 7,0 |
| C: Steinmehl (<40ym) | 46,0 |

Die Aufbereitung mit 12,0 Gew.-% Wasser führte zu folgenden 28-Tages-Werten:
- Druckfestigkeit (N/mm²) :: 0,39
- k-Wert (m/s): 8,5 x 10⁻¹¹

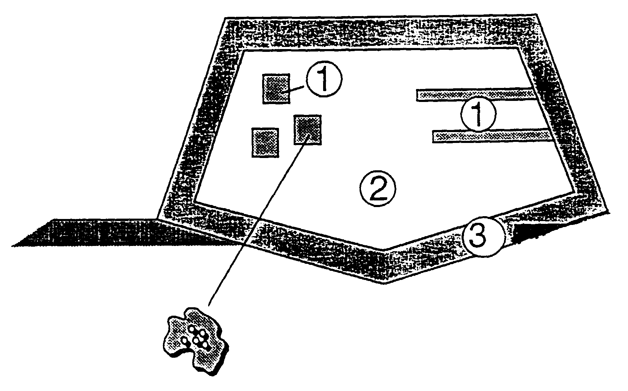

## Patentansprüche

1. Verwendung einer nach Wasserzugabe dauerhaft verformbaren, nicht aushärtenden Masse aus:
1.1
1 bis 90 Gew.-% einer stückigen Komponente A, die aus Bau-Reststoffen, nicht reaktiven Schlacken, abgebundenen anorganischen Bindemitteln, hydraulisch nicht reaktiven Bindemitteln, hydraulisch nicht reaktiven Bindemittelbestandteilen oder einer Mischung daraus in einer Kornfraktion <32 mm besteht,
1.2
2 bis 15 Gew.-% eines quellfähigen Tonminerals (Komponente B),
1.3
1 bis 90 Gew-% einer Komponente C, die aus Bau-Reststoffen, nicht reaktiven Schlacken, abgebundenen anorganischen Bindemitteln, hydraulisch nicht reaktiven Bindemitteln, hydraulisch nicht reaktiven Bindemittelbestandteilen einschließlich Aschen, Gesteinsmehl oder einer Mischung daraus in einer Konfraktion 1mm besteht,
wobei die Summe der Komponenten B und C mindestens 10 Gew.-% beträgt, zur Umhüllung oder Einkapselung von schadstoffhaltigen Materialien oder zur Herstellung von Schlitzwänden.

2. Verwendung nach Anspruch 1, bei der die Komponente A in einer Kornfraktion <16mm vorliegt.

3. Verwendung nach Anspruch 1, bei der die Komponente A in einer Menge von 70 bis 85 Gew.-% vorliegt.

4. Verwendung nach Anspruch 1, bei der die Komponente C in einer Kornfraktion <100ym vorliegt.

5. Verwendung nach Anspruch 1, bei der die Komponente A aus klassierten Bau-Abbruchmaterialien, Müllverbrennungsschlacke, Hochofenschlacke, stückiger Rostasche, Gips, Gipsknorpeln, nichtreaktiven, granulierten oder kompaktierten Aschen einzeln oder in Kombination besteht.

6. Verwendung nach Anspruch 1, bei der die Komponente C aus feinteiligen Bau-Abbruchmaterialien, Müllverbrennungsschlacke, Hüttensand, Aschen aus der Braunkohlen-, Steinkohlen oder Wirbelschichtfeuerung, Gips sowie anderen nichreaktiven Aschen einzeln oder in Kombination besteht.

7. Verwendung nach Anspruch 1, bei der die Komponente B aus Bentonit besteht.

8. Verwendung nach Anspruch 7, bei der der Bentonit ein Na-Bentonit ist.

## Claims

1. Use of a compound which, after the addition of water, is long-lastingly, deformable and is non-hardening, comprising:
1.1 from 1 to 90 wt-% of a lump component A which comprises building recyclings, non-reactive slags, set inorganic binders, hydraulically non-reactive binders, hydraulically non-reactive binder constituents or a mixture thereof in a particle fraction of < 32 mm,
1.2 from 2 to 15 wt-% of a swellable clay mineral (component B),
1.3 from 1 to 90 wt-% of a component C which comprises building recyclings, non-reactive slags, set inorganic binders, hydraulically non-reactive binders, hydraulically non-reactive binder constituents including ashes, rock flour or a mixture thereof in a particle fraction of < 1 mm,
wherein the sum of the components B and C is at least 10 wt-%, for encasing or encapsulating hazardous substance-containing materials or for producing subterraneous curtains.

2. Use according to Claim 1, in which the component A is present in a particle fraction of < 16 mm.

3. Use according to Claim 1, in which the component A is present in a quantity of from 70 to 85 wt-%.

4. Use according to Claim 1, in which the component C is present in a particle fraction of < 100 ym.

5. Use according to Claim 1, in which the component A comprises classified building demolition materials, waste incineration slag, blast furnace slag, lump grate ash, gypsum, plaster lumps, non-reactive granulated or compacted ashes either individually or in combination.

6. Use according to Claim 1, in which the component C comprises finely divided building demolition materials, waste incineration slag, finely dispersed blast furnace slag, ashes from firing using brown coal, hard coal or from a fluid bed furnace, gypsum and other non-reactive ashes either individually or in combination.

7. Use according to Claim 1, in which the component B comprises bentonite.

8. Use according to Claim 7, in which the bentonite is a Na bentonite.

## Revendications

1. Utilisation d'un mélange non durcissable, déformable en permanence après addition d'eau, comprenant de 1 à 90 % en poids d'un composant A, formé de morceaux, constitué par des matériaux de construction résiduels, des scories non réactives, des liants minéraux durcis, des liants non réactifs sur le plan hydraulique, des composants de liants non réactifs sur le plan hydraulique ou un mélange de ceux-ci, avec une granulométrie inférieure à 32 mm ; de 2 à 15 % en poids d'un minéral d'argiles, susceptible de gonfler (composant B) ; de 1 à 90 % en poids d'un composant C, qui est constitué par des matériaux de construction résiduels, des scories non réactives, des liants minéraux durcis, des liants non réactifs sur le plan hydraulique et des constituants de liants non réactifs sur le plan hydraulique, y compris des cendres, de la chaux naturelle en poudre ou un mélange de ceux-ci, avec une granulométrie inférieure à 1 mm ; la somme des composants B et C représentant au moins 10 % en poids ; ledit mélange étant utilisé pour envelopper ou pour enrober des matériaux contenant des substances toxiques ou pour construire des rideaux souterrains.

2. Utilisation d'un mélange selon la revendication 1, dans lequel le composant A présente une granulométrie inférieure à 16 mm.

3. Utilisation d'un mélange selon la revendication 1, dans lequel la teneur en composant A représente 70 à 85 % en poids.

4. Utilisation d'un mélange selon la revendication 1, dans lequel le composant C présente une granulométrie inférieure à 100 µm.

5. Utilisation d'un mélange selon la revendication 1, dans lequel le composant A est constitué par les matériaux calibrés suivants, isolés ou combinés : des gravats de matériaux de construction, des scories provenant des usines d'incinération d'ordures, des scories de hauts-fourneaux, des scories de matte crue en particules grossières, du plâtre, des cartilages de plâtre, des cendres granulées ou compactées non réactives.

6. Utilisation d'un mélange selon la revendication 1, dans lequel le composant C est constitué par des gravats de matériaux de construction en particules fines, des scories provenant des usines d'incinération d'ordures, des poussières de hauts-fourneaux, des cendres provenant de la lignite, de la houille ou des combustibles de lits fluidisés, du plâtre, ainsi que d'autres cendres non réactives, isolés ou combinés.

7. Utilisation d'un mélange selon la revendication 1, dans lequel le composant B est constitué de bentonite.

8. Utilisation d'un mélange selon la revendication 7, dans lequel la bentonite est une bentonite de sodium.
